# NEUE EUROPÄISCHE PATENTSCHRIFT

(11) **EP 0 517 032 B2**
(45) Veröffentlichungstag und Bekanntmachung des Hinweises auf die Entscheidung über den Einspruch: **13.10.1999**
(45) Hinweis auf die Patenterteilung: 28.08.1996
(21) Anmeldenummer: 92108488.5
(22) Anmeldetag: 20.05.1992
(51) Int. Cl.: G01N 27/30

(54) **Patronenförmiges Ableitelement für potentiometrische Messketten und Verfahren zu dessen Herstellung**
Cartridge shaped electrode for potentiometric measurements and method for manufacturing it
Electrode en forme de cartouche pour des mesures potentiométriques et son procédé de fabrication

(30) Priorität: 07.06.1991 DE 4118667
(43) Veröffentlichungstag der Anmeldung: 09.12.1992
(73) Patentinhaber: SCHOTT-GERÄTE GMBH, D-65701 Hofheim (DE)
(72) Erfinder: Dornauf, Andrea, W-6233 Kelkheim (DE); Gehringer, Werner, W-6100 Darmstadt (DE); Tauber, Günter, W-6239 Kriftel (DE)
(74) Vertreter: Fuchs Mehler Weiss & Fritzsche

(56) Entgegenhaltungen:
- DE-A- 3 305 962
- DE-A- 3 840 961
- DIN 19264: Bezugselektrode, pH-Messung, Dez. 1985

## Beschreibung

Die Erfindung betrifft eine Ableitungspatrone für potentiometrische Meßketten sowie ein Verfahren zu dessen Herstellung.

Zur Erzeugung eines zuverlässigen und reproduzierbaren Potentialübergangs von einem metallischen Leiter zu einer Elektrolytlösung bedient man sich üblicherweise sogenannter Ableitelemente. Diese sind beispielsweise Bestandteil von Bezugselektroden, pH-Glaselektroden, ionenselektiven Meßelektroden, oder auch Einstabmeßketten für pH. Redox etc..

Aufgrund seines großen Temperatureinsatzbereiches von ca. - 30°C bis + 135°C in Verbindung mit der physiologischen Unbedenklichkeit der verwendeten Substanzen und nicht zuletzt wegen der daraus folgenden leichten Entsorgbarkeit verbrauchter Materialien ist das Silber/Silberchlorid-Ableitelement den weiteren bekannten Ableitelementen, wie etwa der Standardwasserstoffelektrode, der Kalomelelektrode, der Thalamidelektrode oder auch anderen, nicht einzeln aufgeführten, nur für spezielle Systeme brauchbaren Elektroden überlegen.

Ein einfaches Silber/Silberchlorid-Ableitelement besteht aus einem in einer Kaliumchloridlösung getauchten Silberdraht. Dabei bildet sich eine dünne Silberchloridschicht auf der Silberelektrode aus und es entsteht ein stabiles Potential, solange kein elektrischer Strom oder wechselnde Temperaturen auf die Elektrode einwirken.

Die Potentialstabilität einer solchen einfachen Ausführungsform wird dadurch verbessert, daß der Kaliumchloridelektrolyt an Silberchlorid gesättigt wird und festes Silberchlorid als Bodenkörper zugegeben wird. Für eine weitere Stabilisierung des Potentials kann außerdem der Silberdraht entweder elektrolytisch und/oder durch Tauchen in eine Silberchloridschmelze mit einer Silberchloridschicht überzogen werden.

Derartige einfache Ableitelemente mit einer Silberdrahtelektrode sind beispielsweise aus H. Galster:"Ph-Messung : Grundlagen, Methoden, Anwendungen, Geräte", VCH Verlagsgesellschaft mbH, Weinheim, 1990, Seite 72 bekannt geworden.

Es ist dabei auch durch die DE 38 40 961 A1 bekanntgeworden, bei ionensensitiven Elektroden einfache Ableitelemente der vorgenannten Art einzusetzen bei denen alternativ zu Drahtelektroden aus Ir/Ir0ₓ Innenbeschichtungen der Elektrolytkammer aus diesem Material als Schichtelektroden vorgesehen sind.

Darüberhinaus ist es auch durch die vor dem Prioritätstag gelieferte pH-Magensonde CK2801C der Firma Radiometer A/S, Kopenhagen, bekanntgeworden, bei einer symmetrischen Glaselektrodenkette für die Glaselektrode einen mit AgCl beschichteten Silberdraht und für die Bezugselektrode eine auf dem Aussenrohr der Glaselektrode durch Silberpaste aufgebrachte Schicht aus Ag/AgCl als einfaches Ableitsystem der vorgenannten Art vorzusehen.

Zur weiteren Steigerung der Potentialkonstanz und insbesondere zur Erzielung einer verbesserten Qualität ist es ferner bekannt, Silber/Silberchlorid-Ableitelemente in Patronenform zu verwenden. Diese Ableitungspatronen bestehen aus einem als Elektrode in ein dünnes Röhrchen eingebrachten Silberdraht, der zwecks Sättigung von Silberchlorid umgeben ist. Gleichzeitig ist das Röhrchen unter Ausbildung einer Kammer zur Aufnahme der Silberelektrode und des festen Silberchlorids von beiden Seiten verschlossen. Die eine Seite ist dabei gas- und flüssigkeitsdicht verschlossen, um den elektrischen Anschluß vor Korrosion zu schützen und die andere Seite ist halbdurchlässig verschlossen, um einen Flüssigkontakt zum Bezugselektrolyten, beispielsweise der KCI-Lösung, zu gewährleisten und das feste Silberchlorid in der Patrone einzuschließen. Solche Ableitungspatronen sind beispielsweise aus den Katalogen der Firma Schott Geräte und zwar Nr 387, Seite 19 aus dem 3. Quartal 1986 sowie aus Nr 3105, Seite 30 aus IX, Quartal 1990 bekannt.

Sie werden weiterhin in dem vorerwähnten Buch von H. Galster auf Seite 73 beschrieben.

Bei diesen Ableitungspatronen sind typischerweise zwei Verschlüsse notwendig, ein gas-und flüssigkeitsdichterVerschluß, durch den hindurch die Ableit-Elektrode geführt werden muß und ein halbdurchlässiger Verschluß für den Kontakt zum Elektrolyten. Beide Verschlüsse sind Problemstellen der Ableitungspatronen.

Gemäß dem Stand der Technik, beschrieben in den vorgenannten Veröffentlichungen, wird der gas- und flüssigkeitsdichte Verschluß zum Schutz des elektrischen Anschlusses dadurch erreicht, daß an den Silberdraht ein Platindraht angeschmolzen ist, an den wiederum zur späteren Kontaktierung ggf. ein Steckkontakt angeschweißt sein kann. Die Einheit aus Silberdraht, Platindraht und ggfls. Steckkontakt wird im Bereich des Platindrahts in ein als Körper oder Gehäuse dienendes Glasröhrchen eingeschmolzen.

Der Vorgang des Einschmelzens ist dabei besonders aufwendig und kritisch, da der Platindraht sowohl zum Einschmelzen positioniert werden muß, als auch gas- und flüssigkeitsdicht durch die Verschmelzstelle hindurchgeführt sein muß, um spätere Korrosion am Steckkontakt zu verhindern. Eine besonders sorgfältige Behandlung erfordert die resultierende Verschmelzstelle, die insbesondere spannungsfrei gekühlt werden muß, um Glasbruch bei Temperaturwechsel und mechanischer Beanspruchung zu vermeiden.

Desweiteren ist es bekannt, z.B. aus DE-B-1,303,322 oder aus der vorerwähnten Stelle bei Galster, anstelle des Steckkontaktes einen weiteren Silberdraht an den Platindraht anzuschmelzen, falls keine Steckkontakttechnik erforderlich ist. Diese Ausführungsform ist bezüglich der Verschmelzstelle genauso empfindlich wie die zuerst genannte; zudem scheint das Kontaktieren durch Löten oder Crimpen auch keine besonderen Vorteile bereitzustellen, so daß der wirtschaftlicheren Stecktechnik der Vorzug zu geben ist.

Gattungsgemäße patronenartige Bezugselektroden offenbart die DE-OS 33 05 962. Bei den dort beschriebenen Systemen ist in ein inneres Gehäuse, das in seinem Elektrolytraum einen Referenzelektrolyten enthält und mit dem Innenraum eines äußeren Gehäuses verbunden ist, eine Halbzellenelektrode in Kontakt mit dem Referenzelektrolyten sowie mechanisch nach außen abgeschirmt geführt.

Die DE-OS 33 05 962 realisiert also die Verwendung lackierter Silberdrähte, die in Glasröhrchen eintauchen und nur am Ende zur Potentialbildung abisoliert sind. Dies konnte aber nicht zur besseren Stabilität des Ableitpotentials beitragen.

Neben einer Elektrode in Drahtform sind auch, beispielsweise in der DE-PS 3,818,845, planare Schichten aus Silber als Basis für ein Ableitelement beschrieben worden. Außerdem offenbart beispielsweise CA 114(1): 2998c das Beschichten eines ebenen Substrats mit einer Silberpaste zur Erzeugung von Elektroden für elektrochemische Einmalsensoren (Thermistoren). Eine Bauform mit den Vorteilen einer Patrone für den praktischen Einsatz wurde jedoch bislang nicht realisiert.

Die Erfindung geht von den vorbeschriebenen Ableitungspatronen, die eine besondere Gattung der Ableitelemente mit einem klar abgegrenzten typischen Aufbau bilden, aus.

Gegenüber dem oben diskutierten Stand der Technik besteht die Aufgabe der Erfindung darin, ein patronenförmiges Ableitelement für potentiometrische Meßketten zu finden, das sich durch hohe Polarisationsstabilität auszeichnet und relativ unempfindlich gegen wechselnde Temperatureinflüsse sowie mechanische Beanspruchung ist. Gleichzeitig soll ein Verfahren zur sauberen, einfachen, größtenteils automatisierbaren und dadurch preiswerten Herstellung eines solchen Ableitelements angegeben werden.

Diese Aufgaben werden durch eine im Patentanspruch 1 beschriebene Ableitungspatrone gelöst, bzw. durch ein im Patentanspruch 4 angegebenes Verfahren zu dessen Herstellung.

Darüberhinaus ist es durch vor dem Prioritätstag gelieferte Leitfähigkeitsmeßzellen der Firma IngoldMeßtechnik AG bekanntgeworden, das Meßzellenrohr im unteren Teil aussen mit Leiterbahnen aus Metallfolie oder Leitlack zu versehen und diese Leiterbahnen über Durchkontaktierungalöcher mit im Innern des Meßzellenrohres als Beschichtung aufgetragene Leiterbahnen aus Silberfarbe zu verbinden.

Dieses bekannte Meßzellenrohr hat jedoch einen völlig anderen Aufbau als die Ableitungspatronen, von denen die Erfindung ausgeht und ist daher damit nicht vergleichbar.

Die Bezeichnung "patronenförmig" weist im Sinne der Erfindung nicht notwendigerweise auf eine bestimmte außere geometrische Form oder auch Gestalt hin, vielmehr beinhaltet sie, daß das Ableitelement aufgrund einer geschlossenen, sozusagen gekapselten Bauart einfach und sicher zu handhaben und vor äußeren widrigen Einflüssen wie Schlag oder Stoß geschützt ist. Hierbei ist nicht ausgeschlossen, daß das erfindungsgemäße Ableitelement auch eine äußere Form aufweisen kann, die dem Erscheinungsbild einer Patrone ähnelt.

Die Kammer, die nichts anders ist als ein allseitig umgrenzter Hohlraum im Inneren des Glasröhrchens, wobei dieser Hohlraum zur Aufnahme einer Substanz dient, welche bei Gebrauch des Ableitelements das dann abzugreifende Potential stabilisiert, grenzt an mindestens einer Stelle an ein erstes Verschlußmittel.

Das erste Verschlußmittel ist halbdurchlässig für Flüssigkeiten. Erfindungsgemäß verwendbar sind insbesondere Watte, aber auch poröse Kunst- und Naturstoffe sowie geeignete lonenaustauschermaterialien. Prinzipiell verwendbar ist also eine Vielzahl von Materialien, es muß nur gewährleistet sein, daß der Innenraum der Kammer in direktem innigen Kontakt mit von außen kommenden Flüssigkeiten treten kann. Dabei ist darauf zu achten, daß die mindestens eine Öffnung des Glasröhrchens so angeordnet ist, daß eine externe Flüssigkeit zum ersten Verschlußmittel hin, durch dieses hindurch und in die Kammer hinein gelangen kann. Daher muß eine Verbindung zwischen Öffnung und erstem Verschlußmittel bestehen.

Das erste Verschlußmittel ist desweiteren so auszuwählen, daß eine in der Kammer enthaltene potentialstabilisierende Substanz nicht aufgrund der Schwerkraft der Substanz oder der Porosität des Verschlußmittels als Feststoff aus der Kammer austreten kann. Alle oben genannte Materialien können dies sicherstellen.

Die Kammer grenzt weiterhin mindestens an einer anderen Stelle an ein zweites Verschlußmitlel. Das zweite Verschlußmittel darf weder Feststoff noch Gase oder Flüssigkeiten durchlassen. Materialien, die dies gewährleisten können, sind vor allem geeignete Dichtmassen auf Epoxid- oder Silikonbasis, andere Vergußmassen sowie Glaslot.

Im Gegensatz zum Stand der Technik, bei dem die Elektrode nur als Draht aus der Kammer herausgeführt wurde, wird beim erfindungsgemäßen Ableitelement mindestens ein Teil der inneren Oberfläche des Glasröhrchens mit Silber beschichtet. Insbesondere muß die Beschichtung so angeordnet sein, daß ein beim Einsatz des Ableitelements sich einstellendes Potential abgreifbar ist. Darunter ist zu verstehen, daß die Silberbeschichtung so an der Glasröhrchen innenwand entlang aus der Kammer nach außen zwischen Innenoberfläche des Glasröhrchens und dem Verschlußmittel herausgeführt ist, daß mit Steckern, Klemmen, Drahten oder anderen Leitern ein Kontakt mit der herausgeführten Silberschicht bewirkt werden kann, wodurch eine Spannung abgreifbar wird.

Es ist nicht notwendigerweise so, daß die gesamte Glasröhrchen innenwand mit Silber gleichmäßig beschichtet ist. So genügt oft nur eine teilweise, wenn auch zusammenhängende Beschichtung; zur Vermeidung von Instabilitaten bei Polarisation ist jedoch eine kontinuierliche Beschichtung von einheitlicher Dicke und hoher Gleichmäßigkeit bevorzugt. Geeignet sind Beschichtungsdicken der inneren Oberfläche des Glasröhrchens zwischen 1 und 300 µm. Bevorzugt werden Schichten zwischen 10 und 200 µm, besonders bevorzugt weist die Beschichtung eine Dicke zwischen 50 und 150 µm auf.

Erfindungsgemäß ist, daß vom ersten Verschlußmittel berührte Abschnitte der Innenoberfläche des Glasröhrchens keine Silberbeschichtung aufweisen, d.h., zur Ausbildung eines Potentials muß in jedem Fall Elektrolytlösung durch das erste Verschlußmittel hindurch in die Kammer eindringen.

Die Erfindung erlaubt bei der Fertigung des Ableitelements großere und leichter einzuhaltende Toleranzen vorzugeben, ohne dadurch die Qualität zu senken.

Es hat sich insbesondere auch aus Fertigungsgründen als Vorteil der Erfindung herausgestellt, daß der Körper des patronenförmigen Ableitelements ein Glasröhrchen ist. Es wird die Kammer durch die Rohrinnenwand und das erste Verschlußmittel, welches ein Rohrende verschließt und das zweite Verschlußmittel, welches das zweite Rohrende verschließt, ausgebildet.

Bei dem patronenförmigen Ableitelement werden die Verschlußmittel, sowohl das erste, als auch das zweite, entweder innerhalb des Glasröhrchens angeordnet, so daß die Kammer gebildet wird, aber die Verlängerung der Rohrwand über die jeweiligen Verschlußmittel hinausreicht.

Geeigneterweise wird allerdings jedoch ein erstes Verschlußmittel das erste Rohrende für Flüssigkeiten halbdurchlässig direkt am Ende verschließen, das zweite Verschlußmittel aber im Rohrinneren, also innerhalb des Glasröhrchens angeordnet sein, so daß das Röhrchen an dieser Stelle in axialer Richtung für Gase und Flüssigkeiten undurchlässig, dicht verschlossen ist.

Dabei wird innerhalb des Röhrchens eine Kammer ausgebildet bei der vorteilhaft die Beschichtung der Innenoberfläche des Glasröhrchens zur Ausbildung der Silberelektrode unter Auslassung von direkt das erste Verschlußmittel berührende und an das erste Verschlußmittel angrenzenden Abschnitten bis an das zweite Ende des Glasröhrchens reicht.

Da die Elektrode zwischen Röhrchenrinnenwandung und Verschlußmittel hindurchgeführt ist, kann sie in sehr einfacher Weise kontaktiert werden. So muß nicht in aufwendiger Bauart ein Platindraht angeschmolzen werden, sondern es genügt ein einfacher Steckkontakt, der in das nicht zur Kammer gehörende aber beschichtete Röhrcheninnere gesteckt wird und dort klemmend oder ggf unter Anbringung von zusätzlichen Befestigungsmitteln das Ableiten des Potentials ermöglicht.

Es ist allerdings jederzeit auch möglich, durch Löten oder andere Befestigungstechniken einen Draht oder einen Stecker anzubringen, da das erfindungsgemäße Ableitelement in seiner Ausgestaltung auch bei einer Anbringung beispielsweise einer zusätzlichen Lötstelle immer noch dem bekannten patronenförmigen Ableitelement überlegen ist, da die Oberfläche des Ableitmetalls bei der Elektrode in Beschichtungsform größer als bei einer drahtförmigen Silberelektrode ist, woraus eine bessere Stabilität des Potentials bei Polarisation folgt.

Falls das zweite Verschlußmittel direkt am Ende des Glasröhrchens angeordnet ist, ist nur eine unter Umständen sehr kleine Fläche der Silberelektrode in Beschichtungsform zum Kontaktieren vorhanden. Aber selbst in solch einem Fall gelingt immer noch das Ableiten eines stabilen Potentials, beispielsweise durch Anlöten eines Steckers oder Drahtes, wenn die Silberbeschichtung sich bis zur äußeren Oberfläche des Röhrchens fortsetzt.

Der Durchmesser des Glasröhrchens beträgt ca. 1 bis 8 mm; bevorzugt liegt der Durchmesser im Bereich von 1,5 bis 4 mm, besonders bevorzugt zwischen 2 und 3 mm. Es sind alle gängigen Glassorten zur Herstellung eines patronenförmigen Ableitelements in Rohrform geeignet, insbesondere findet bei Glasröhrchen auch Glaslot als zweites Verschlußmittel Verwendung.

Bei der Herstellung des erfindungsgemäßen Ableitelements kann folgendermaßen verfahren werden:

Zunächst wird ein zwei gegenüberliegende offene Enden aufweisendes Glasrohr mit einem Durchmesser von 2,2 mm, einer Wanddicke von 0,35 mm und einer Länge von 110 mm des Ableitelements mit einem offenen Ende in eine Beschichtungsmasse, z.B. Silbereinbrennpaste ARGONOR der Fa. Doduco, die das Silber zur Beschichtung liefert, von geeigneter Viskosität eingetaucht.

Durch Druckmanipulation, d.h. durch leichten Überdruck von außen oder Unterdruck von der anderen Seite des Glasröhrchens wird Beschichtungsmasse in das Glasröhrchen hineinbefördert, so daß zumindest ein Teil der inneren Oberfläche des Röhrchens mit Beschichtungsmasse benetzt und/oder zumindest ein Teil des Innenraums des Röhrchens damit gefüllt wird. Die Füllhohe, z.B. 30 mm, bzw. die benetzte Innenfläche lassen sich exakt einstellen, insbesondere kann durch die Füllhöhe die Größe der zu beschichtenden Fläche und die Schichtdicke gesteuert werden.

Nachdem die gewünschte Füllhöhe bzw. Benetzung erreicht ist, wird das Glasröhrchen aus der Beschichtungsmasse entfernt.

Bei Glasröhrchen von geringem Querschnitt bleibt aufgrund der Kapillarkräfte Teil der Beschichtungsmasse im Innenraum. Bei Verwendung von Glasröhrchen mit größeren Querschnitten bleibt jedoch aufgrund von Adhäsionskräften ebenfalls eine zur Beschichtung ausreichende Menge der Beschichtungsmasse im Glasröhrchen.

Die im Glasröhrchen befindliche Beschichtungsmasse wird dann durch Anwendung eines Gas- oder Luftstromes durch Blasen oder Saugen definiert verteilt. Über die Menge an Beschichtungsmasse, den Blas-/Saugdruck und die Blas-/Saugzeit läßt sich die Größe und Dicke der beschichteten Fläche exakt steuern. Im angegebenen Beispiel betragen die Schichtdicke ca. 80 µm und die Länge der beschichteten Fläche ca. 105 mm.

Anschließend wird die Beschichtung, z.B. bei 120 °C, getrocknet und, z.B. bei 520°C, eingebrannt; zur Herstellung eines funktionsfähigen Ableitelements wird darauffolgend in den beschichteten Innenraum des Glasröhrchens eine definierte Menge Verschlußmasse mit einem Dosiergerät eingebracht, wodurch entweder das zweite offene Ende direkt oder auch der dem zweiten offenen Ende benachbarte Abschnitt des Glasröhrchens, vom zweiten Ende her, gas- und flüssigkeitsdicht verschlossen wird, wobei die Beschichtung zwischen Verschlußmasse und Innenoberfläche des Glasröhrchens, von außen zugängig, herausgeführt wird.

Nach dem Einbringen bzw. Anwenden der Verschlußmasse läßt man diese trocknen und/oder aushärten, wobei die Aushärftbedingungen wie Temperatur, Zeit, Feuchtigkeit etc. sich nach der Art der Verschlußmasse richten, z.B 24 Stunden bei Raumtemperatur wenn Einkomponeneten - Silikonkleber verwendet wird.

Nach der Fertigung des gas- und flüssigkeitsdichten Verschlusses wird vom nicht eingetauchten offenen Ende des Glasröhrchen her die potentialstabilisierende Substanz mit evtl. Zusatzstoffen eingefüllt und dann von derselben Seite her geeignet verschlossen, z.B. mit Watte. Damit wird die Kammer ausgebildet die die potentialstabilisierende Substanz enthält.

Als potentialstabilisierende Substanz wird Silberchlorid verwendet. Auch alle üblichen Zusätze sind einbringbar.

Beim erfindungsgemäßen Verfahren ist besonders hervorzuheben, daß es voll automatisierbar ist, so daß die Ableitelemente incl. Steckkontakte automatisch gefertigt werden können und daß die Oberfläche des Ableitmetalls bei der Fertigung nicht durch Berühren verschmutzt wird. Durch die saubere Verarbeitungsweise wird insbesondere die Qualität des Ableitelements verbessert.

Der Einsatz von Glasröhrchen mit einem Durchmesser zwischen ca. 1 und 8 mm gewährleistet insbesondere, daß beim Beschichtungsvorgang zum einen eine geeignete Menge an Beschichtungsmasse im Röhrchen verbleibt und zum anderen ist Glas ein transparentes Material, so daß die Größe der beschichteten Fläche optisch exakt kontrolliert und eingestellt werden kann.

Als Beschichtungsmaterialien, in welche die Glasröhrchen mit einem Ende eingetaucht werden, sind besonders geeignet sogenannte Silberleitlacke, oder auch Silberpasten, wie sie beipielsweise in der Dickschichttechnik üblich sind. Es ist weiterhin besonders bevorzugt, daß man als Beschichtungsmasse Silbereinbrennpaste verwendet. Wird eine Kombination von Glasrohr und Silbereinbrennpaste verwendet, folgt nach dem Beschichten eine Trockenphase bei ca. 100 bis 150°C und je nach verwendetem Glas und Pastentyp anschließend ein Einbrennen der Silberpaste bei ca. 450 bis 600°C.

Der gas- und flüssigkeitsdichte Verschluß wird bevorzugt durch Einbringen einer definierten Menge an Epoxyd, Silicon oder Glaslot als Verschlußmasse und anschließendem Trocknen- und Aushärtenlassen der Verschlußmasse hergestellt. Dabei richten sich die Aushärtebedingungen nach der Art der Verschlußmasse und im Fall des Glaslotes können auch hohe Temperaturen zum Verschmelzen oder Sintern erforderlich sein.

Nachfolgend wird die Erfindung anhand einer Ausführungsform unter Bezugnahme auf die Figuren und die darin verwendeten Bezugszeichen näher beschrieben.

Es zeigen:
- Fig. 1: einen Schnitt entlang der Längsachse des Glasröhrchens durch eine Ausführungsform des erfindungsgemäßen Ableitelements;
- Fig. 2: die Draufsicht vom zweiten offenen Ende her auf die in Figur 1 gezeigte Ausführungsform des erfindungsgemäßen Ableitelements;
- Fig. 3: die Draufsicht vom ersten offenen Ende her auf die in Figur 1 gezeigte Ausführungsform des erfindungsgemäßen Ableitelements; und
- Fig. 4: eine schematische Darstellung des Ablaufs einer Ausführungsform des erfindungsgemäßen Verfahrens.

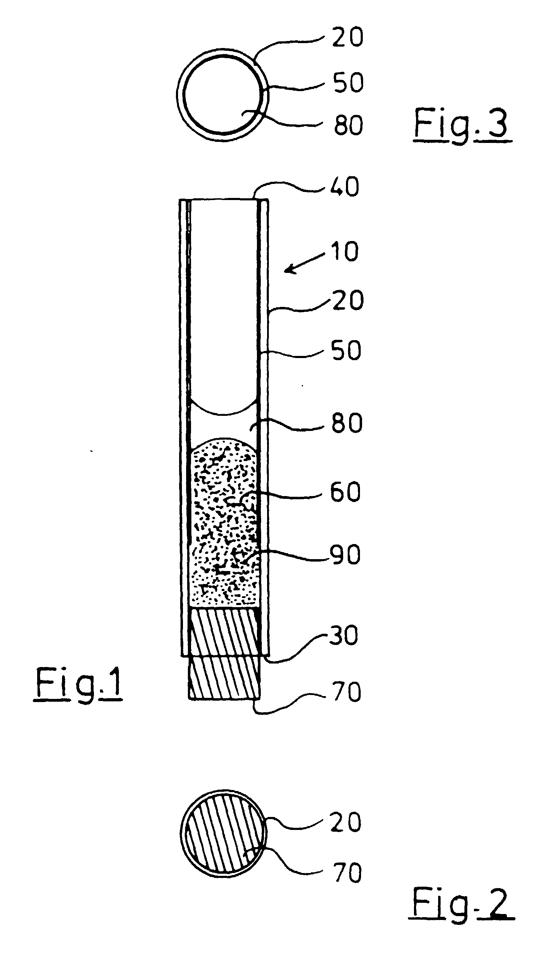

Das in Figur 1 gezeigte Ableitelement 10 weist ein Glasröhrchen 20 auf, das zwei Enden 30 und 40 hat. Die Innenwand des Röhrchens 20 weist eine teilweise Silberbeschichtung 50 auf, die zur Ausbildung der Elektrode dient. Im gezeigten Beispiel reicht die Beschichtung 50 entlang des gesamten Innenumfangs der Röhrcheninnenwand vom zweiten offenen Ende 40 bis zu einem Abschnitt in einiger Entfernung vom ersten Ende des Röhrchens 20. Ein vom ersten Rohrende 30 sich in axialer Richtung erstreckender Abschnitt der Röhrcheninnenwandoberfläche ist entlang der gesamten Umfangsrichtung nicht mit Silber beschichtet.

Das Glasröhrchen 20 weist desweiteren in seinem Inneren eine Kammer 60 auf, die von beschichteten und nicht beschichteten Abschnitten der Röhrcheninnenwand sowie von einem ersten Verschlußmittel 70 und einem zweiten Verschlußmittel 80 begrenzt ist. Das zweite gas- und flüssigkeitsdichte Verschlußmittel 80 ist im Röhrcheninneren angeordnet und ist in Rohrumfangsrichtung nur in Kontakt mit der Beschichtung 50, wohingegen das erste Verschlußmittel 70, das für Flüssigkeiten halbdurchlässig ist, in Rohrumfangsrichtung nur mit der Röhrcheninnenwand in Berührung ist. Die Kammer 60 enthält in ihrem Inneren Silberchloridsalz als potentialstabilisierende Substanz 90 dem ggf. auch noch weitere geeignete potentialstabilisierende Substanzen zugesetzt sind. Wie insbesondere auch aus den Figuren 2 und 3 ersichtlich wird, bildet die zylinderförmige Silberschicht 50 die elektrische Durchführung an der inneren Oberfläche des Glasröhrchens, die im gezeigten Beispiel bis zum zweiten offenen Ende 40 des Glasröhrchens 20 reicht, so daß über einen Klemmkontakt oder auch einen Steckkontakt sehr leicht das Potential abgegriffen werden kann. Die innere, metallisch leitende Schicht 50 stellt auf der der Kammer 60 zugewandten einen Seite des gas- und flüssigkeitsdichten Verschlusses 80 das Ableitmetall dar, wobei die größere Oberfläche im Vergleich zum Silberdraht bessere Eigenschaften bezüglich der Polarisierbarkeit bietet. Auf der anderen der Kammer 60 abgewandten Seite des gas- und flüssigkeitsdichten Verschlusses 80 bildet die zylinderförmige Silberschicht 50 die Möglichkeit des direkten Kontaktierens mit einem federnden Anschlußdraht.

Im folgenden wird das erfindungsgemäße Verfahren an Hand einer beispielhaften Ausführungsform näher erläutert.

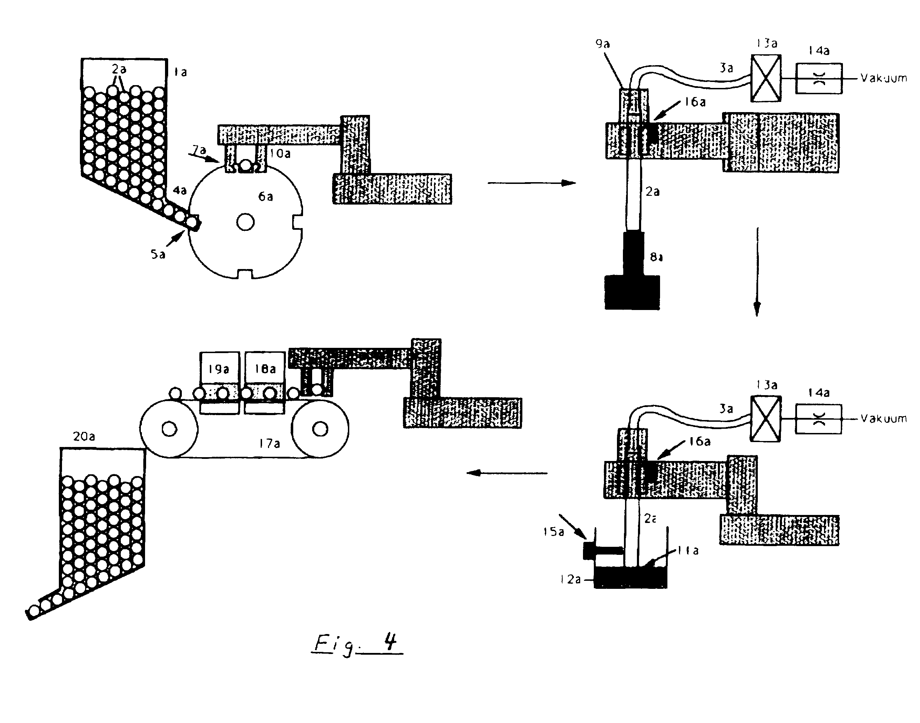

Wie in Fig. 4 erkennbar ist nimmt ein Silo (1a) eine bestimmte Anzahl (z.B. 200 bis 10.000) Glasrohre (2a) auf. Durch die Schwerkraft wird entlang der Öffnung (4a) ein einzelnes Glasrohr in die Position (5a) gebracht von der aus dieses Glasrohr mit einem ersten Greifer (6a) in die Position (7a) befördert wird. Von dieser Position aus wird das Glasrohr (2a) durch die Positioniereinheit (8a) in die Aufnahme (9a) befördert, die den Anschluß an eine Vakuumleitung (3a) herstellt. Ein zweiter Greifer (10a), der mit der Aufnahme (9a) verbunden ist, nimmt das Glasrohr auf und befördert es in die Position (11a), in der das eine Ende des Glasrohres (2a) in die Silberbeschichtungspaste (12a) taucht. Über das Ventil (13a) und eine Drossel (14a) wird ein definierter Unterdruck im Glasrohr (2a) über das zweite Ende erzeugt, so daß die Beschichtungspaste (12a) in das Glasrohr (2a) gesaugt wird.

Ein optoelektronischer Sensor (15a) erfaßt und meldet die erreichte Füllhöhe und steuert Ventil (13a), Drossel (14a) und den Greifer (10a), um das Glasrohr aus der Beschichtungspaste zu entfernen und durch Anwendung eines Vakuums am einen Ende des Glasrohres (2a) und den äußeren Luftdruck die Beschichtungspaste (12a) im Glasrohr (2a) zu verteilen und die innere Oberfläche des Glasrohres mit der Paste (12a) zu beschichten. Alternativ zur Anwendung des Vakuums kann zum Verteilen der Beschichtungspaste das Glasrohr auch mit dem zweiten Ende mit einem nicht abgebildeten Blasstutzen verbunden werden. Ein zweiter optoelektronischer Sensor (16a) erkennt die vorgegebene Länge der zu beschichtenden inneren Oberfläche des Glasrohres (2a) und schaltet über das Ventil (13a) das Vakuum ab, wodurch die zu beschichtende Fläche des Glasrohres genau bestimmt ist.

Der zweite Greifer (10a) befördert das Glasrohr (2a) nun auf ein Förderband (17a), welches das Glasrohr zunächst durch den Trockenofen (18a), dann durch den Einbrennofen (19a) befördert, um dann in dem zweiten Silo (20a) abgelegt zu werden. In ähnlicher Weise, wie die oben beschriebene Beschichtung der inneren Oberfläche des Glasrohres mit Silberbeschichtungspaste, erfolgt auch die Dosierung des Epoxidharzes zur Ausbildung des zweiten Verschlusses (80) zum Korrosionsschutz des Anschlußkontakts.
Das Befüllen der Kammer (60) mit potentialstabilisierendem Silberchlorid und Zusatzstoffen sowie das Anbringen des ersten Verschlusses (70) kann in jeder beliebigen gewohnten Art erfolgen.

Damit ist ein völlig neuartiger Weg beschrieben zur Herstellung von Ableitsystemen für potentiometrische Meßketten. Die so hergestellten Ableitpatronen haben sowohl technische als auch wirtschaftliche Vorteile gegenüber den herkömmliche hergestellten Ableitpatronen.

### Bezugszeichenliste

- 10: Ableitelement
- 20: Glasröhrchen
- 30: erstes Ende
- 40: zweites Ende
- 50: Silberbeschichtung
- 60: Kammer
- 70: erstes Verschlußmittel
- 80: zweites Verschlußmittel
- 90: potentialstabilisierende Substanz

- 1a: Silo
- 2a: Glasrohre
- 3a: Vakuumleitung
- 4a: Öffnung
- 5a: Positionsangabe
- 6a: erster Greifer
- 7a: Positionsangabe
- 8a: Positioniereinheit
- 9a: Aufnahmeeinheit
- 10a: zweiter Greifer
- 11a: Positionsangabe
- 12a: Silberbeschichtungspaste
- 13a: Ventil
- 14a: Drossel
- 15a: Sensor
- 16a: Sensor
- 17a: Förderband
- 18a: Trockenofen
- 19a: Einbrennofen
- 20a: Silo

## Patentansprüche

1. Ableitungspatrone (10) für potentiometrische Meßketten, mit
a) einem Glasröhrchen (20), das einen Durchmesser von ca. 1 bis 8 mm hat,
- das an einem Ende (30) mit einem ersten Verschlußmittel (70) für den potentialbildenden Elektrolyten halbdurchlässig verschlossen ist,
- in dem durch ein innerhalb des Röhrchens (20), axial beabstandet von dem ersten Verschlußmittel (70) angeordnetes, zweites gas- und flüssigkeitsdichtes Verschlußmittel (80) eine zylindrische Kammer (60) ausgebildet ist, die mit einer potentialstabilisierenden Substanz zumindest in Form von Silberchlorid (90) befüllt ist,
und
b) einer Silberelektrode in Form einer zumindest teilweisen Beschichtung (50) der Innenoberfläche des Röhrchens (20) mit Silber, die so ausgeführt ist, daß sie zum einen Ende (30) hin das erste Verschlußmittel (70) nicht berührt und daß sie sich von der Kammer (60) aus bis zum anderen Ende (40) des Röhrchens (20) hin, das zweite Verschlußmittel (80) gas- und flüssigkeitsdicht durchdringend, durchgehend erstreckt, wo das beim Gebrauch der Ableitungspatrone (10) sich in der Kammer (60) zwischen der Elektrode und der durch den ersten Verschluß (70) eindringenden, außerhalb des Röhrchens (20) befindlichen Flüssigkeit ausbildende Potential abgreifbar ist.

2. Ableitungspatrone nach Anspruch 1, dadurch gekennzeichnet, daß die Dicke der Beschichtung (50) der inneren Oberfläche des Glasröhrchens (20) zwischen 1 und 300 µm, bevorzugt zwischen 10 und 200 µm und besonders bevorzugt zwischen 50 und 150 µm, beträgt.

3. Ableitungspatrone nach Anspruch 1 oder 2, dadurch gekennzeichnet, daß der Durchmesser des Glasröhrchens (20) 2 bis 3 mm beträgt.

4. Verfahren zur Herstellung einer Ableitungspatrone für potentiometrische Meßketten nach einem der vorhergehenden Ansprüche, bei dem man nacheinander
a) ein zwei gegenüberliegende offene Enden aufweisendes Glasröhrchen mit einem offenen Ende in einer Silberbeschichtungsmasse oder silberhaltige Beschichtungsmasse von geeigneer Viskosität eintaucht;
b) durch Druckmanipulation zumindest einen Teil der inneren Oberfläche des Glasröhrchens mit Beschichtungsmasse benetzt und/oder einen Teil des Innenraums des Glasröhrchens damit füllt;
c) das Glasröhrchen aus der Beschichtungsmasse entfernt;
d) durch Anwendung eines Gas- oder Luftstromes zur Einstellung der Beschichtungsdicke die Beschichtungsmasse durch Blasen oder Saugen definiert verteilt;
e) die Beschichtung trocknet und/oder einbrennt;
f) in den beschichteten Innenraum des Glasröhrchens eine definierte Menge an Verschlußmasse mit einem Dosiergerät einbringt;
g) die Verschlußmasse trocknen, aushärten, verschmelzen oder sintern läßt; und
h) vom nicht eingetauchten offenen Ende des Glasröhrchens her eine potentialstabilisierende Substanz und evtl. Zusatzstoffe einfüllt und geeignet verschließt.

5. Verfahren nach Anspruch 4, dadurch gekennzeichnet, daß man als Beschichtungsmasse Silbereinbrennpaste verwendet.

6. Verfahren nach Anspruch 5, dadurch gekennzeichnet, daß man nach der Trocknung die Beschichtung bei Temperaturen zwischen 450°C und 500°C einbrennt.

7. Verfahren nach einem der Ansprüche 4 bis 6, dadurch gekennzeichnet, daß man als Verschlußmasse, die in den beschichteten Innenraum des Glasröhrchens eingebracht wird, Epoxyd oder Silicon Klebstoff/Vergußmassen verwendet.

8. Verfahren nach einem der Ansprüche 4 bis 6, dadurch gekennzeichnet, daß man als Verschlußmasse Glaslot verwendet.

9. Verfahren nach Anspruch 8, dadurch gekennzeichnet, daß man zum Trocknen und/oder Aushärten hohe Temperaturen verwendet, so daß das Glaslot mit dem Glasröhrchen verschmilzt, bzw. sintert.

## Claims

1. Reference-junction cartridge (10) for potentiometric measuring chains, having
a) a small glass tube (20), which has a diameter of about 1 to 8 mm,
- which at one end (30) is closed by a first closure means (70) in such a manner that it is semipermeable to the potential-forming electrolyte,
- in which tube a cylindrical chamber (60) is formed by a second gas- and liquid-tight closure means (80), arranged within the tube (20) axially away from the first closure means (70) and is filled with a potential-stabilizing substance at least in the form of silver chloride (90),
and
b) a silver electrode in the form of an at least partial coating (50) with silver of the inner surface of the tube (20), which is configured in such a manner that towards one end (30) it does not touch the first closure means (70) and that it extends continuously from the chamber (60) to the other end (40) of the tube (20), penetrating the second closure means (80) in a gas- and liquid-tight manner, where the potential forming during use of the reference-junction cartridge (10) in the chamber (60) between the electrode and the liquid penetrating through the first closure (70) and located outside the tube (20) can be picked off.

2. Reference-junction cartridge according to Claim 1, characterized in that the thickness of the coating (50) of the inner surface of the small glass tube (20) is between 1 and 300 µm, preferably between 10 and 200 µm, and particularly preferably between 50 and 150 µm.

3. Reference-junction cartridge according to Claim 1 or 2, characterized in that the diameter of the small glass tube (20) is 2 to 3 mm.

4. Process for manufacturing a reference-junction cartridge for potentiometric measuring chains according to one of the preceding claims, in which, successively,
a) a small glass tube having two opposing open ends dips by one open end into a silver coating composition or silver-containing coating composition of suitable viscosity;
b) by means of pressure manipulation, at least part of the inner surface of the small glass tube is wetted with coating composition and/or part of the inner space of the small glass tube is filled therewith;
c) the small glass tube is removed from the coating composition;
d) by using a gas or air flow to adjust the coating thickness, the coating composition is distributed in a defined manner by way of blowing or suction;
e) the coating is dried and/or baked;
f) a defined quantity of closure composition is introduced into the coated inner space of the small glass tube using a metering device;
g) the closure composition is allowed to dry, harden, fuse or sinter; and
h) from the undipped open end of the small glass tube, a potential-stabilizing substance and, where appropriate, additional substances are introduced and closing is carried out in a suitable manner.

5. Process according to Claim 4, characterized in that silver baking paste is used as the coating composition.

6. Process according to Claim 5, characterized in that, after the drying, the coating is baked at temperatures between 450°C and 600°C.

7. Process according to one of Claims 4 to 6, characterized in that epoxide or silicone adhesive sealing compositions are used as the closure composition which is introduced into the coated inner space of the small glass tube.

8. Process according to one of Claims 4 to 6, characterized in that glass solder is used as the closure composition.

9. Process according to Claim 8, characterized in that high temperatures are used for the drying and/or hardening, so that the glass solder fuses or sinters with the small glass tube.

## Revendications

1. Cartouche de dérivation (10) pour des chaînes de mesure potentiométrique, avec
a) un petit tube en verre (20) ayant un diamètre d'environ 1 à 8 mm,
- qui est fermé de manière semi-perméable à une extrémité (30) par un premier moyen d'obturation (70) pour l'électrolyte d'accroissement du potentiel,
- dans lequel une chambre cylindrique (60), qui est remplie d'une substance stabilisatrice du potentiel au moins sous la forme de chlorure d'argent (90), est formée par un deuxième moyen d'obturation (80) étanche aux gaz et aux liquides, disposé à une distance axiale du premier moyen d'obturation (70) à l'intérieur du petit tube (20),
et
b) une électrode en argent sous la forme d'un revêtement (50) au moins partiel de la surface intérieure du petit tube (20) avec de l'argent, qui est réalisé de telle sorte qu'il n'est pas en contact à une extrémité (30) avec le premier moyen d'obturation (70), et qu'il s'étend en continu, depuis la chambre (60) jusqu'à l'autre extrémité (40) du petit tube (20), en traversant le deuxième moyen d'obturation (80) de manière étanche aux gaz et aux liquides, où peut être prélevé le potentiel se formant lors de l'utilisation de la cartouche de dérivation (10) dans la chambre (60) entre l'électrode et le liquide pénétrant à travers le premier obturateur (70), se trouvant en dehors du petit tube (20).

2. Cartouche de dérivation selon la revendication 1, caractérisée par le fait que l'épaisseur du revêtement (50) de la surface intérieure du petit tube en verre (20) est comprise entre 1 et 300 µm, de préférence entre 10 et 200 µm, et plus particulièrement entre 50 et 150 µm.

3. Cartouche de dérivation selon la revendication 1 ou 2, caractérisée par le fait que le diamètre du petit tube en verre (20) est compris entre 2 et 3 mm.

4. Procédé pour la fabrication d'une cartouche de dérivation pour des chaînes de mesure potentiométrique selon l'une quelconque des revendications précédentes, dans lequel successivement
a) on plonge un petit tube en verre pourvu de deux extrémités ouvertes en vis-à-vis, par une extrémité ouverte dans une masse de revêtement à base d'argent ou contenant de l'argent, de viscosité adaptée,
b) par action sur la pression on mouille au moins une partie de la surface intérieure du petit tube en verre avec la masse de revêtement et/ou on remplit une partie de la chambre intérieure du petit tube en verre avec ladite masse,
c) on retire le petit tube en verre de la masse de revêtement,
d) par application d'un flux de gaz ou d'air visant à régler l'épaisseur de la couche de revêtement, on répartit de manière définie la masse de revêtement par soufflage ou par aspiration,
e) on sèche et/ou on cuit le revêtement,
f) on applique dans la chambre intérieure revêtue du petit tube en verre, à l'aide d'un appareil doseur, une quantité déterminée de masse d'obturation,
g) on fait sécher, durcir, fondre ou fritter la masse d'obturation et
h) on introduit par l'extrémité ouverte, non immergée du petit tube en verre, une substance stabilisatrice du potentiel et éventuellement des adjuvants et on ferme le tube de manière appropriée.

5. Procédé selon la revendication 4, caractérisé par le fait que l'on utilise comme masse de revêtement une pâte à cuire à base d'argent.

6. Procédé selon la revendication 5, caractérisé par le fait qu'après séchage on cuit le revêtement à des températures comprises entre 450°C et 600°C.

7. Procédé selon l'une quelconque des revendications 4 à 6, caractérisé par le fait que l'on utilise comme masse d'obturation appliquée dans la chambre intérieure revêtue du petit tube en verre des adhésifs/masses moulables à base de résines époxydes ou de silicone.

8. Procédé selon l'une quelconque des revendications 4 à 6, caractérisé par le fait que l'on utilise comme masse d'obturation de la soudure de verre.

9. Procédé selon la revendication 8, caractérisé en ce que l'on utilise pour le séchage et/ou le durcissage des températures élevées de sorte que la soudure de verre se fond ou se fritte avec le petit tube en verre.
